# EUROPEAN PATENT APPLICATION

(11) **EP 4 549 693 A1**
(43) Date of publication of application: **07.05.2025**
(21) Application number: 23831587.3
(22) Date of filing: 29.06.2023
(51) Int. Cl.: E06B 9/24, B32B 7/023, B32B 27/00, B32B 27/18, B32B 27/30, C09J 11/08, C09J 133/06, G02B 5/00

(54) **WINDOW MATERIAL AND LIGHT-TRANSMISSIVE ROOF MATERIAL**

(30) Priority: 30.06.2022 JP 2022106168
(71) Applicant: Nitta Corporation, Osaka-shi, Osaka 556-0022 (JP)
(72) Inventor: YAMAGUCHI, Satoshi, Yamatokoriyama-shi, Nara 639-1085 (JP); KATO, Takumi, Yamatokoriyama-shi, Nara 639-1085 (JP)
(74) Representative: Maiwald GmbH
(86) International application number: PCT/JP2023/024199
(87) International publication number: WO 2024/005148

(57) **Abstract**

Provided are: a window material and a light-transparent roof material which can autonomously change the cloudiness thereof in accordance with temperature, have an uncomplicated structure, and can be easily manufactured; a building comprising the window material and/or the light-transparent roof material; and a corresponding vehicle, ship, or aircraft.

The window material or the light-transparent roof material according to the present invention comprises at least one light-transparent base material layer and at least one adhesive layer, wherein: the adhesive layer is formed from an adhesive composition containing 1 to 100 parts by mass of polymer fine particles with respect to 100 parts by mass of a thermosensitive adhesive; the refractive index of the thermosensitive adhesive increases as the temperature decreases, with the rate of increase in the refractive index being greater in the vicinity of the melting point of the thermosensitive adhesive than in a temperature range other than the vicinity of the melting point; and the adhesive power of the adhesive composition decreases as the temperature decreases, with the rate of decrease in the adhesive power being greater in the vicinity of the melting point of the thermosensitive adhesive than in the temperature range other than the vicinity of the melting point.

## Description

### TECHNICAL FIELD

The present invention relates to a window material and a light-transparent roof material. The present invention also relates to architectures, and vehicles, ships, or aircraft including the window material and/or the light-transparent roof material.

### BACKGROUND ART

There are needs for architectures such as office buildings and arcades, and transports such as vehicles, ships, and aircraft, to reduce direct sunlight at high temperatures in summer and to let in solar radiation at low temperatures in winter. For this, a temperature-sensitive dimming liquid laminated body in which the degree of cloudiness changes autonomously in response to temperature stimulation has been proposed as a structure to be provided in a window (Patent Document 1).

### Citation List

### Patent Document

Patent Document 1: Japanese Patent No. 3337810

### DISCLOSURE OF THE INVENTION

### Problems to be Solved by the Invention

There is a problem that providing the above-mentioned laminated body requires a dedicated structure body to maintain the shape of the temperature-sensitive dimming liquid, and a window provided with the above-mentioned laminated body has a complicated structure and time and labor are required for manufacturing.

The present invention was made in view of the above problems, and has an object to provide a window material and a light-transparent roof material capable of autonomously changing the degree of cloudiness in response to temperature and being easily manufactured without having a complicated structure, and architectures, and vehicles, ships, or aircraft, including the window material and/or the light-transparent roof material.

### Means for Solving the Problems

A first aspect of the present invention is
a window material including:
at least one light-transparent base material layer and at least one adhesive layer,
the adhesive layer including an adhesive composition containing 1 to 100 parts by mass of polymer fine particles with respect to 100 parts by mass of a temperature-sensitive adhesive agent,
a refractive index of the temperature-sensitive adhesive agent increasing with a decrease in temperature,
a refractive index increasing rate as an amount of increase in the refractive index per 1°C of the temperature-sensitive adhesive agent being larger near a melting point of the temperature-sensitive adhesive agent than in a temperature range not near the melting point of the temperature-sensitive adhesive agent,
adhesive force of the temperature-sensitive adhesive composition decreasing with a decrease in temperature, and
an adhesive force reduction rate as an amount of decrease in the adhesive force per 1°C of the adhesive composition being larger near the melting point of the temperature-sensitive adhesive agent than in a temperature range not near the melting point of the temperature-sensitive adhesive agent.

A second aspect of the present invention is
a light-transparent roof material including:
at least one layer of a light-transparent base material layer and at least one layer of an adhesive layer,
the adhesive layer including an adhesive composition containing 1 to 100 parts by mass of polymer fine particles with respect to 100 parts by mass of a temperature-sensitive adhesive agent,
a refractive index of the temperature-sensitive adhesive agent increasing with a decrease in temperature,
a refractive index increasing rate as an amount of increase in the refractive index per 1°C of the temperature-sensitive adhesive agent being larger near a melting point of the temperature-sensitive adhesive agent than in a temperature range not near the melting point of the temperature-sensitive adhesive agent,
adhesive force of the temperature-sensitive adhesive composition decreasing with a decrease in temperature, and
an adhesive force reduction rate as an amount of decrease in the adhesive force per 1°C of the adhesive composition being larger near the melting point of the temperature-sensitive adhesive agent than in a temperature range not near the melting point of the temperature-sensitive adhesive agent.

A third aspect of the present invention is an architecture including the window material as described in the first aspect, and/or the light-transparent roof material as described in the second aspect.

A fourth aspect of the present invention is a vehicle, a ship, or an aircraft including the window material as described in the first aspect, and/or the light-transparent roof material as described in the second aspect.

A fifth aspect of the present invention is
an adhesive composition containing 1 to 100 parts by mass of polymer fine particles with respect to 100 parts by mass of a temperature-sensitive adhesive agent,
a refractive index of the temperature-sensitive adhesive agent increasing with a decrease in temperature, and
a refractive index increasing rate as an amount of increase in the refractive index per 1°C of the temperature-sensitive adhesive agent being larger near a melting point of the temperature-sensitive adhesive agent than in a temperature range not near the melting point of the temperature-sensitive adhesive agent,
adhesive force of the adhesive composition decreasing with a decrease in temperature, and
an adhesive force reduction rate as an amount of decrease in the adhesive force per 1°C of the adhesive composition being larger near the melting point of the temperature-sensitive adhesive agent than in a temperature range not near the melting point of the temperature-sensitive adhesive agent.

A sixth aspect of the present invention is
an adhesive sheet including an adhesive layer including the adhesive composition as described in the fifth aspect.

A seventh aspect of the present invention is
a processing method of a workpiece, the method including:
bringing a workpiece into contact with the adhesive layer of the adhesive sheet as described in the sixth aspect;
confirming that the adhesive layer exhibits adhesive force by confirming that the adhesive layer is cloudy or is not cloudy;
processing the workpiece fixed to the adhesive layer by the adhesive force exhibited by the adhesive layer;
confirming that the adhesive layer does not exhibit adhesive force by confirming that the adhesive layer is not cloudy or is cloudy; and
removing the processed workpiece from the adhesive layer not exhibiting the adhesive force.

An eighth aspect of the present invention is
a processing method of a workpiece, the method including:
bringing a support and a workpiece into contact, or workpieces into contact with each other via the adhesive layer of the adhesive sheet as described in the sixth aspect;
confirming that the adhesive layer exhibits adhesive force by confirming that the adhesive layer is cloudy or is not cloudy;
processing the workpiece fixed to the support via the adhesive layer by the adhesive force exhibited by the adhesive layer, or at least one of a plurality of the workpieces fixed to each other via the adhesive layer by the adhesive force exhibited by the adhesive layer;
confirming that the adhesive layer does not exhibit adhesive force by confirming that the adhesive layer is not cloudy or is cloudy; and
removing the processed workpiece from the adhesive layer not exhibiting the adhesive force.

### Effects of the Invention

The present invention can provide a window material and a light-transparent roof material capable of autonomously changing the degree of cloudiness in response to temperatures and being easily manufactured without having a complicated structure, and architectures and vehicles, ships, or aircraft including the window material and/or the light-transparent roof material.

### BRIEF DESCRIPTION OF THE DRAWINGS

FIG. 1 is a sectional view showing a first window material as an example of a window material;
FIG. 2 is a sectional view showing a second window material as an example of a window material;
FIG. 3 is a sectional view showing an example of a light-transparent roof material;
FIG. 4 is a graph showing measurement results of a refractive index in temperature-sensitive adhesive agent produced in Examples;
FIG. 5 is a schematic explanatory diagram showing an evaluation test method of a heat shielding property in Examples;
FIG. 6 is a photograph showing an evaluation test method of a heat shielding property in Examples; and
FIG. 7 is a photograph showing an evaluation test method of a heat shielding property in Examples.

### PREFERRED MODE FOR CARRYING OUT THE INVENTION

Hereinafter, specific embodiments of the present invention will be described in detail. However, the present invention is not limited to the following embodiments, and can be implemented with appropriate modifications added within the scope of the purpose of the present invention. Note here that each drawing shown below is a schematic view, and the size and shape of each part are appropriately exaggerated or omitted for easy understanding.

### <<Window material>>

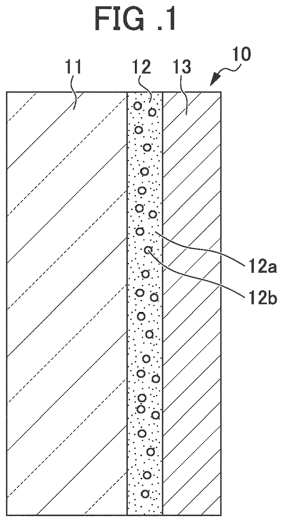

FIG. 1 shows a sectional view of a first window material 10 as an example of a window material. As shown in FIG. 1, in the first window material 10, a light-transparent base material layer 11, an adhesive layer 12, and a base material sheet 13 are laminated in this order. The adhesive layer 12 is made of an adhesive composition including a temperature-sensitive adhesive agent 12a and polymer fine particles 12b.

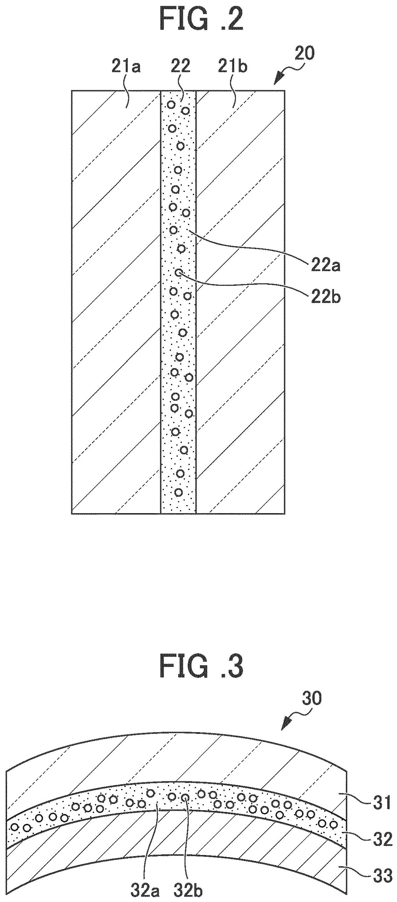

FIG. 2 shows a sectional view of a second window material 20 as another example of the window material. As shown in FIG. 2, in the second window material 20, an adhesive layer 22 is disposed between two light-transparent base material layers 21a and 21b. The adhesive layer 22 includes an adhesive composition including a temperature-sensitive adhesive agent 22a and polymer fine particles 22b.

In FIGs. 1 and 2, in the temperature-sensitive adhesive agent 12a and 22a, a refractive index increases with a decrease in temperature, and a refractive index increasing rate as an amount of increase in the refractive index per 1°C is larger near the melting point than in a temperature range not near the melting point. Therefore, when the temperature of the adhesive layers 12 and 22 rises by solar radiation or air temperature, a difference in the refractive index between the temperature-sensitive adhesive agents 12a and 22a and the polymer fine particles 12b and 22b increases, and a haze value increases. On the other hand, when the temperature of the adhesive layers 12 and 22 decreases, the difference in the refractive index between the temperature-sensitive adhesive agents 12a and 22a and the polymer fine particles 12b and 22b becomes smaller, and the haze value decreases. This allows the degree of cloudiness to change autonomously in response to temperatures, and direct sunlight can be softened at high temperatures in summer, and sunlight can be allowed to enter at low temperatures in winter. Note here that it can also be designed so that the difference in the refractive index between the temperature-sensitive adhesive agents 12a and 22a and polymer fine particles 12b and 22b becomes smaller with an increase in temperature. In this case, for example, when the temperature is relatively low and the amount of sunlight is low, such as in the morning or at night, the window material functions as frost glass. Meanwhile, when the temperature rises as the amount of sunlight increases during the day time, the window material becomes transparent, so sunlight can be allowed to enter into the room. Furthermore, when the above window materials are installed in a location exposed to the outside air, the above window material become cloudy or transparent as the outside temperature rises, so it also has a function of making people being in air-conditioned rooms be visually aware of the rise in outside temperature.

Furthermore, in the adhesive composition constituting the adhesive layers 12 and 22, adhesive force decreases with a decrease in temperature, and the adhesive force reduction rate as an amount of decrease in the adhesive force per 1°C is larger near a melting point of the temperature-sensitive adhesive agents 12a and 22a of the adhesive composition than in a temperature range not near the melting point. Therefore, even if air bubbles are entrained or wrinkles are formed when the adhesive layers 12 and 22 are disposed, the adhesive layers 12 and 22 can be peeled off and disposed again by decreasing the temperature of the adhesive layers 12 and 22. Thereby, the window materials can be manufactured more easily.

Hereinafter, each layer constituting the first window material 10 and the second window material 20 is described.

### [Light-transparent base material layer]

A light-transparent base material constituting a light-transparent base material layer is not particularly limited as long as it is a base material that can be used as window materials for architectures, vehicles, ships, and aircraft, and, for example, a glass plate or a resin plate can be used. Examples of material for the glass plate include soda lime glass, borosilicate glass, high silica glass, and the like. Examples of material for the resin plate include polyalkyl methacrylates such as polymethyl methacrylate, polyalkyl acrylate, polycarbonate, polymethylstyrene, acrylonitrile-styrene copolymers, and the like.

A thickness of the light-transparent base material layer is not particularly limited, but is, for example, 0.1 mm or more and 10 mm or less. Examples of the shape of the light-transparent base material layer include a planar shape like the first window material 10 and the second window material 20, a curved shape, and the like.

The light-transparent base material layer includes at least one layer, and may include a single layer like the first window material 10, or two or more layers like the second window material 20. When the light-transparent base material layer includes two or more layers, each layer is made of the same type of base material, or may be made of different types of base materials. Furthermore, the layers may have the same thickness, or different thicknesses.

### [Adhesive layer]

The adhesive layer is a layer including an adhesive composition containing 1 to 100 parts by mass of polymer fine particles with respect to 100 parts by mass of a temperature-sensitive adhesive agent, and has the function of autonomously changing the degree of cloudiness and the adhesive force in response to temperatures.

A thickness of the adhesive layer is not particularly limited, but is preferably 5 µm or more and 1 mm or less, more preferably 10 µm or more and 100 µm or less. Note here that the thicker the adhesive layer is, the more the dimming function tends to be exhibited with addition of a small amount of polymer fine particles. As the thickness is smaller, the larger amount of the polymer fine particles tends to need to be added in order to exhibit the dimming function.

The adhesive layer includes at least one layer. The adhesive layer may include a single layer like the first window material 10 and the second window material 20, or may include two or more layers. The arrangement of the adhesive layer with respect to the light-transparent base material layer is not particularly limited. The adhesive layer may be disposed on a side of the light-transparent base material layer where sunlight enters, or may be disposed on the opposite side. When the light-transparent base material layer includes two or more layers, the adhesive layer may be disposed between the light-transparent base material layers like the second window material 20. Note here that the adhesive layer may cover the entire surface of a surface where the adhesive layer and the light-transparent base material layer are in contact with each other, or may cover a part of the surface. When the adhesive layer covers a part of the surface where the adhesive layer and the light-transparent base material layer are in contact with each other, a character, a symbol, a pattern, a figure, a picture, and the like, may be drawn on the light-transparent base material layer by the adhesive layer. In this case, the adhesive layer may form a character or a pattern, or a region surrounded by the adhesive layer may form a character or a pattern. Such window materials have excellent design properties when haze appears or disappears at high temperatures. Furthermore, the adhesive layer may have a plurality of types of regions with different haze values at high temperatures or low temperatures. The haze value of the adhesive layer can be changed by changing the type of temperature-sensitive adhesive agents or polymer fine particles, or by changing the amount of polymer fine particles used. For example, by continuously forming a plurality of adhesive layers having different haze values at high temperatures or low temperatures on a light-transparent base material in a belt-like shape, a window material excellent in design property exhibiting gradated haze at high temperatures or low temperatures can be provided.

It is preferable that a difference between a haze value of the adhesive layer at 23°C and a haze value of the adhesive layer at 60°C is 10% or more. In particular, it is more preferable that the haze value of the adhesive layer at 60°C is higher by 10% or more than the haze value at 23°C. This tends to make it easier to visually recognize changes in degree of cloudiness depending on temperature. In this specification, the haze value of the adhesive layer is a value measured by the method described in the Examples below.

The haze value of the adhesive layer at 23°C is preferably 20% or less, and more preferably 10% or less. The lower limit of the haze value at 23°C is not particularly limited. Furthermore, the haze value of the adhesive layer at 60°C is preferably 12% or more, and more preferably 20% or more. The upper limit of the haze value at 60°C is not particularly limited, but is, for example, 70% or less and 50% or less.

It is preferable that a difference between a transmittance of solar radiation through the adhesive layer at 23°C and a transmittance of solar radiation through the adhesive layer at 60°C is 10% or more. The transmittance of solar radiation through the adhesive layer at 60°C is preferably lower by 10% or more than the transmittance of solar radiation at 23°C. Note here that in this specification, the transmittance of solar radiation through the adhesive layer is a value measured by the method described in the below-mentioned Examples.

The transmittance of solar radiation through the adhesive layer at 23°C is preferably 30% or more, and more preferably 40% or more. The upper limit of the transmittance of solar radiation at 23°C is not particularly limited, but is, for example, 95% or less, or 85% or less. Furthermore, the transmittance of solar radiation through the adhesive layer at 60°C is preferably 60% or less, more preferably 40% or less, and still more preferably 30% or less. The lower limit of the transmittance through solar radiation at 60°C is not particularly limited, but is, for example, 5% or more or 15% or more.

### (Polymer fine particles)

The average particle diameter of polymer fine particles is preferably 0.1 µm or more, and more preferably 1 µm or more. Furthermore, the average particle diameter is preferably 100 µm or less, more preferably 30 µm or less, and still more preferably 10 µm or less. In particular, from the viewpoint of easily increasing the haze, the average particle diameter is still more preferably 0.1 µm or more and 10 µm or less, and most preferably 1 µm or more and 6 µm or less. From the viewpoint of easily suppressing the transmission of solar radiation, the average particle diameter is still more preferably 6 µm or more and 25 µm or less, and most preferably 6 µm or more and 10 µm or less. From the viewpoint of easily shielding heat, the average particle diameter is still more preferably 6 µm or more and 25 µm or less, and most preferably 6 µm or more and 10 µm or less. Furthermore, the D90 particle diameter of the polymer fine particles is preferably not more than the thickness of the adhesive layer, and is, for example, 1 µm or more and 1000 µm or less, and 3 µm or more and 100 µm or less. When the D90 particle diameter is not more than the thickness of the adhesive layer, the surface of the adhesive layer becomes uniform and the adhesive force tends to be less likely to be impaired. Note here that in this specification, the average particle diameter of the polymer fine particles is a value measured by the method described in Examples below.

A polymer constituting the polymer fine particles preferably includes a constituent unit derived from a monomer including one ethylenic unsaturated group. Preferably examples of the ethylenic unsaturated group include a (meth)acryloyl group, a (meth)acrylamide group, a vinyl group, and a (meth)allyl group, and the like, and a (meth)acryloyl group, and a vinyl group are preferable.

Monomers containing one ethylenically unsaturated group include (meth)acrylic acid; (meth)acrylate such as methyl(meth)acrylate, ethyl(meth)acrylate, butyl(meth)acrylate, isobornyl(meth)acrylate, benzyl(meth)acrylate, and hydroxyethyl(meth)acrylates; vinyl monomers such as styrene, vinyl acetate, and acrylonitrile; and the like. These may be used alone or in combination of two or more.

The ratio of the mass of the constituent unit derived from the monomer containing one ethylenically unsaturated group to the mass of the polymer constituting the polymer fine particles is preferably 70% by mass or more, more preferably 80% by mass or more, and still more preferably 90% by mass or more. The above ratio may be 100% by mass, but is preferably 98% by mass or less.

The polymer constituting the polymer fine particles may include a constituent unit derived from any other monomer copolymerizable with a monomer including one ethylenic unsaturated group. Examples of other monomers include polyfunctional monomers, refractive index adjusting monomers, and the like. In other words, the polymer constituting the polymer fine particles may include a constituent unit derived from a polyfunctional monomer, or a refractive index adjusting monomer.

The polyfunctional monomer can crosslink a plurality of molecular chains included in the polymer constituting the polymer fine particles. From the viewpoint of the dispersion state of the polymer fine particles during use, suppressing deformation, and maintaining repeatability of functions, the polymer constituting the polymer fine particles preferably includes a constituent unit derived from a polyfunctional monomer. In other words, the polymer fine particles and a polymer constituting the polymer fine particles are preferably crosslinked. The polyfunctional monomer has two or more, preferably 2 to 4, radically polymerizable double bonds in the molecule. Examples of the polyfunctional monomer include bifunctional (meth)acrylate, trifunctional (meth)acrylate, tetrafunctional (meth)acrylate, and the like. Specific examples include 1,6-hexanediol di(meth)acrylate, 1,9-nonanediol di(meth)acrylate, trimethylolpropane tri(meth)acrylate, pentaerythritol tetra(meth)acrylate, polyethylene glycol 200 di(meth)acrylate, ethoxylated bisphenol A di(meth)acrylate, and the like. These may be used alone or in combination of two or more of these. The polyfunctional monomer may be at least one selected from bifunctional (meth)acrylate, trifunctional (meth)acrylate, and tetrafunctional (meth)acrylate.

The ratio of the mass of the constituent unit derived from the polyfunctional monomer to the mass of the polymer constituting the polymer fine particles is preferably 0.1% by mass or more, and more preferably 1% by mass or more. Furthermore, the above ratio is preferably 20% by mass or less, and more preferably 10% by mass or less.

The refractive index adjusting monomer may be a monomer having a refractive index of 1.300 to 1.600. Examples of the refractive index adjusting monomer include 2-(O-phenylphenoxy)ethyl acrylate (refractive index: 1.577), 2-propenoic acid (3-phenoxyphenyl)methyl ester (refractive index: 1.566), 1-naphthyl acrylate (refractive index: 1.595), acrylamide (refractive index: 1.515), hydroxyacrylamide (refractive index: 1.515), EO-modified bisphenol A diacrylate (refractive index: 1.537), acrylamide (refractive index: 1.515), 2,2,2-trifluoroethyl acrylate (refractive index: 1.348), methacryl-modified polydimethylsiloxane (refractive index: 1.408), and the like. These may be used alone or in combination of two or more of these.

The ratio of the mass of the constituent unit derived from the refractive index adjusting monomer to the mass of the polymer constituting the polymer fine particles is preferably 0.1% by mass or more, and more preferably 1% by mass or more. Furthermore, the above ratio is preferably 30% by mass or less, more preferably 20% by mass or less, and still more preferably 10% by mass or less.

Since dispersibility in a temperature-sensitive adhesive agent tends to be good, the polymer fine particles preferably do not include a constituent unit derived from a reactive emulsifier. A reactive emulsifier is an emulsifier having a polymerizable unsaturated bond such as a vinyl group in its molecule. A reactive emulsifier is a polymerizable monomer that has an emulsifying function and has a polymerizable group having an unsaturated bond such as a vinyl group in its molecule, and a hydrophilic group.

In the adhesive composition, the content of the polymer fine particles is 1 part by mass or more and 100 parts by mass or less with respect to 100 parts by mass of the temperature-sensitive adhesive agent. The content is preferably 5 parts by mass or more, and more preferably 20 parts by mass or more. Furthermore, the above content is preferably 70 parts by mass or less, and more preferably 40 parts by mass or less.

The method for producing polymer fine particles is not particularly limited, and conventionally known polymerization methods such as miniemulsion polymerization and suspension polymerization can be employed.

### (Temperature-sensitive adhesive agent)

A temperature-sensitive adhesive agent has a melting point. The temperature-sensitive adhesive agent crystallizes at temperatures less than the melting point, and undergoes a phase transition and exhibits fluidity at temperatures of the melting point or higher. As a result, in an adhesive composition including a temperature-sensitive adhesive agent, the adhesive force decreases with a decrease in temperature, and the adhesive force reduction rate as an amount of decrease in adhesive force per 1°C is larger near the melting point of the temperature-sensitive adhesive agent in the adhesive composition than in a temperature range not near the melting point. Note here that in this specification, the adhesive force of the adhesive composition means peel strength against polyethylene terephthalate (PET), and is a value measured by the method described in the below-mentioned Examples.

The peel strength of the adhesive composition against polyethylene terephthalate (PET) at 23°C is preferably 1.0 N/25 mm or less. The lower limit of the peel strength is not particularly limited. Furthermore, the peel strength of the adhesive composition against polyethylene terephthalate (PET) at 60°C is preferably 1.0 N/25 mm or more. The upper limit of the peel strength is not particularly limited.

The melting point of the temperature-sensitive adhesive agent is preferably 25°C or more, and more preferably 40°C or more. Furthermore, the melting point is preferably 70°C or less, and more preferably 60°C or less. Note here that in this specification, the melting point of the temperature-sensitive adhesive agent is a value measured by the method described in the below-mentioned Example.

The melting point of the temperature-sensitive adhesive agent can be adjusted, for example, by changing the composition of the monomer components constituting the side chain crystalline polymer included in the temperature-sensitive adhesive agent. Specifically, for example, by changing the length of the side chain in the side chain crystalline polymer, the melting point can be adjusted. When the length of the side chain is long, the melting point of the temperature-sensitive adhesive agent tends to be high.

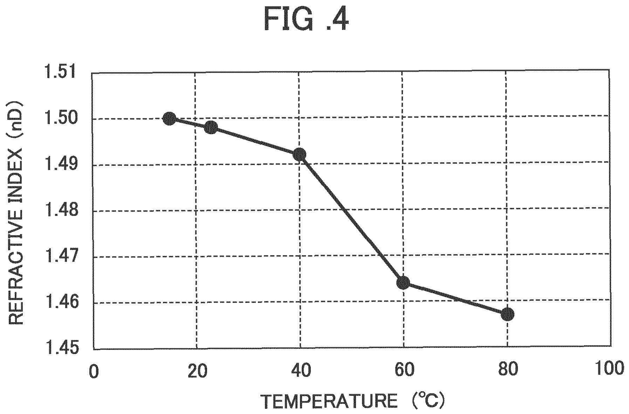

FIG. 4 is a graph showing a change of the refractive index with respect to a change of the temperature in the temperature-sensitive adhesive agent (melting point: 55°C) produced in Examples described below. As shown in FIG. 4, the refractive index of the temperature-sensitive adhesive agent increases with a decrease in temperature, and the refractive index increasing rate as an amount of increase in the refractive index per 1°C is larger near the melting point than in a temperature range not near the melting point. Note here that in this specification, the refractive index is a value measured by the method described in the below-mentioned Examples.

The refractive index of the temperature-sensitive adhesive agent at 23°C is preferably higher by 0.02 or more than the refractive index of the temperature-sensitive adhesive agent at 60°C. This tends to make it easier to visually recognize changes in degree of cloudiness depending on temperature.

It is preferable that the temperature-sensitive adhesive agent includes a side chain crystalline polymer. The side chain crystalline polymer preferably includes a constituent unit derived from a (meth)acrylic monomer including a linear alkyl group having 14 or more carbon atoms. In the constituent unit derived from a (meth)acrylic monomer including a linear alkyl group having 14 or more carbon atoms, the linear alkyl group having 14 or more carbon atoms acts as a side chain crystalline site in the side chain crystalline polymer. In other words, the side chain crystalline polymer is, for example, a comb-shaped polymer including a linear alkyl group having 14 or more carbon atoms in the side chain. When the side chains are aligned in an ordered arrangement by intermolecular force or the like, the side chain crystalline polymer is crystallized. Note that the above-mentioned (meth)acrylic monomer is an acrylic monomer or a methacrylic monomer. The upper limit of the number of carbon atoms in the linear alkyl group is preferably 50 or less, more preferably 30 or less.

Examples of the (meth)acrylic monomer including a linear alkyl group having 14 or more carbon atoms include cetyl (meth)acrylate, stearyl (meth)acrylate, eicosyl (meth)acrylate, behenyl (meth)acrylate, and the like. These may be used alone or in combination of two or more of these.

The ratio of the mass of the constituent unit derived from the (meth)acrylic monomer including a linear alkyl group having 14 or more carbon atoms to the mass of the side chain crystalline polymer is preferably 30% by mass or more, and more preferably 40% by mass or more. The above ratio is preferably 90% by mass or less, more preferably 70% by mass or less, and still more preferably 60% by mass or less.

The side chain crystalline polymer preferably includes a constituent unit derived from a (meth)acrylic monomer including a linear alkyl group having 1 or more and 12 or less carbon atoms, or a constituent unit derived from a functional group monomer for crosslinking. Furthermore, the side chain crystalline polymer may include constituent units derived from other monomers copolymerizable with these monomers. Examples of other monomers include refractive index adjusting monomers, and the like. In other words, the side chain crystalline polymer may include a constituent unit derived from a refractive index adjusting monomer.

Examples of (meth)acrylic monomers including a linear alkyl group having 1 or more and 12 or less carbon atoms include methyl (meth)acrylate, ethyl (meth)acrylate, propyl (meth)acrylate, butyl (meth)acrylate, pentyl (meth)acrylate, hexyl (meth)acrylate, and the like. These may be used alone or in combination of two or more of these. Among these, methyl (meth)acrylate is preferable in that it has high cohesive force and can easily suppress the decrease in adhesive force when the temperature rises.

The ratio of the mass of the constituent unit derived from a (meth)acrylic monomer including the linear alkyl group having 1 or more and 12 or less carbon atoms to the mass of the side chain crystalline polymer is preferably 1% by mass or more, more preferably 20% by mass or more, and still more preferably 40% by mass or more. The above ratio is preferably 69% by mass or less, and more preferably 60% by mass or less.

Examples of functional group monomers include (meth)acrylates having a hydroxyalkyl group such as hydroxyethyl (meth)acrylate, hydroxypropyl (meth)acrylate, and hydroxyhexyl (meth)acrylate; ethylenically unsaturated monomers having a carboxyl group such as acrylic acid, methacrylic acid, crotonic acid, itaconic acid, maleic acid, and fumaric acid; and the like. These may be used alone or in combination of two or more of these.

The ratio of the mass of the constituent unit derived from the functional group monomer to the mass of the side chain crystalline polymer is preferably 1% by mass or more, and more preferably 3% by mass or more. Furthermore, the above ratio is preferably 20% by mass or less, and more preferably 10% by mass or less. When the ratio is 1% by mass or more, the shape retention property tends to be good. When the ratio is 20% by mass or less, the viscosity is not excessively high and coating property tends to be good.

The refractive index adjusting monomer may be a monomer having a refractive index of 1.300 to 1.600. Examples of the refractive index adjusting monomer include 2-(O-phenylphenoxy)ethyl acrylate (refractive index: 1.577), 2-propenoic acid (3-phenoxyphenyl) methyl ester (refractive index: 1.566), 1-naphthyl acrylate (refractive index: 1.595), acrylamide (refractive index: 1.515), hydroxyacrylamide (refractive index: 1.515), EO-modified bisphenol A diacrylate (refractive index: 1.537), acrylamide (refractive index: 1.515), 2,2,2-trifluoroethyl acrylate (refractive index: 1.348), methacryl-modified polydimethylsiloxane (refractive index: 1.408), and the like. These may be used alone or in combination of two or more of these.

The ratio of the mass of the constituent unit derived from the refractive index adjusting monomer to the mass of the side chain crystalline polymer is preferably 0.1% by mass or more, more preferably 1% by mass or more, and still more preferably 10% by mass or more. Furthermore, the above ratio is preferably 30% by mass or less.

The weight average molecular weight of the temperature-sensitive adhesive agent is preferably 200,000 or more, and more preferably 400,000 or more. The above weight average molecular weight is preferably 2,000,000 or less, and more preferably 1,000,000 or less. When the weight average molecular weight is 200,000 or more, the adhesive force tends to be sufficient. When the weight average molecular weight is 2,000,000 or less, the viscosity decreases and the coating property tends to be sufficient. Note here that in this specification, the weight average molecular weight of a temperature-sensitive adhesive agent is a value measured by the method described in the below-mentioned Examples.

The weight average molecular weight of the temperature-sensitive adhesive agent can be adjusted, for example, by using a chain transfer agent during polymerization. Examples of the chain transfer agent include thiol compounds such as dodecylmercaptan, mercaptopropionic acid, mercaptosuccinic acid, ethylhexylmercaptoacetate, mercaptoethanol, and cyclohexanethiol. These may be used alone or in combination of two or more of these.

The difference in the refractive index at 23°C between the temperature-sensitive adhesive agent and the polymer fine particles is preferably less than 0.015, and more preferably less than 0.010. Furthermore, the refractive index difference at 60°C is preferably 0.015 or more. The upper limit of the refractive index difference at 60°C is not particularly limited, but is, for example, 0.1. Thus, in general, the adhesive layer exhibits high light-transparency in a warm atmosphere where humans and pets can live comfortably, and in high-temperature atmospheres such as summer, the adhesive layer exhibits a haze and the light-transparency decreases. Furthermore, by adjusting the refractive indices of the temperature-sensitive adhesive agent and the polymer fine particles, a difference in the refractive index between the temperature-sensitive adhesive agent and the polymer fine particles at 23°C can be designed to be 0.015 or more, and the difference in the refractive index at 60°C be less than 0.015. In this case, for example, when the adhesive layer is applied to a window glass, the window glass functions as frost glass under the condition that the temperature is relatively low and the amount of sunlight is small, such as in the morning and at night, and on the other hand, when the temperature increases with an increase in the amount of sunlight in the daytime, the window glass becomes transparent and the room can be efficiently lightened. Thus, lightening to a room only in the daytime can be easily carried out without opening and closing a curtain.

The ratio of the mass of the temperature-sensitive adhesive agent to the mass of the solid content of the adhesive composition is not particularly limited, but is, for example, 50% by mass or more and 95% by mass or less. Note here that in this description, the solid content of the adhesive composition means all the components except a solvent such as an aqueous solvent and an organic solvent from the adhesive composition.

The method for producing the temperature-sensitive adhesive agent is not particularly limited, and conventionally known polymerization methods such as solution polymerization and UV polymerization can be employed.

The adhesive composition may contain a crosslinking agent for crosslinking the temperature-sensitive adhesive agent. In other words, the temperature-sensitive adhesive agent may be crosslinked. Examples of the crosslinking agents used include aziridine crosslinking agents, metal chelate crosslinking agents, epoxy crosslinking agents, isocyanate crosslinking agents, and the like.

In the adhesive composition, the content of the crosslinking agent is not particularly limited, but is, for example, 0.1 parts by mass or more and 10 parts by mass or less with respect to 100 parts by mass of the temperature-sensitive adhesive agent. When the content is 0.1 parts by mass or more, the shape retention property tends to be less likely to decrease. Furthermore, when the content is 10 parts by mass or less, high adhesive force tends to be easily exhibited.

The adhesive composition may include a solvent such as an organic solvent, an inhibitor that suppresses the progress of crosslinking, an adhesion giving resin (tackifier), an ultraviolet (UV) absorber, a light stabilizer (HALS), an antioxidant, an infrared absorber, and other additives such as dyes and pigments.

### [Application]

The mode of use of the above-mentioned adhesive composition is not limited. The mode of use of the above-mentioned adhesive composition can be appropriately selected depending on the purpose. The above-mentioned adhesive composition can autonomously change the degree of cloudiness in response to temperatures. When the adhesive composition is designed to produce haze at high temperatures, the adhesive composition can be used suitably, for example, for window materials, light-transparent roof materials, and the like, because direct sunlight can be softened during high temperatures in summer and sunlight can be allowed to enter during low temperatures in winter. On the other hand, when the adhesive composition is designed to produce haze at low temperatures, for example, when the adhesive composition is applied to window glass, the window glass functions as frost glass in a condition in which the temperature is relatively low and the amount of sunlight is low, such as in the morning or at night, while the window glass becomes transparent and sunlight can be allowed to enter the room efficiently when the temperature rises with an increase in the amount of sunlight during daytime. Furthermore, the above-mentioned adhesive composition can allow designs such as a character, a symbol, a pattern, a figure, and a picture to appear or disappear when a haze appears or disappears at high temperatures due to heat sources such as lighting, solar radiation, or air temperatures, and can give excellent display properties (designs such as a character and a symbol) and decorative properties (designs such as a pattern, a figure, and a picture) to an object including an adhesive layer. Therefore, the adhesive composition can be suitably used, for example, for decoration of light covers, for decoration of light-transparent base materials of window materials and light-transparent roof materials, and for display of light-transparent base materials such as window materials and light-transparent roof materials.

### [Base material sheet]

The window above material may or may not include a base material sheet. The base material sheet has a function as a support when the adhesive layer is laminated on the light-transparent base material layer, and a function as a protective layer for the adhesive layer.

The base material constituting the base material sheet is not particularly limited as long as it is a light-transparent base material. Examples of the base material include PET such as corona treated PET, untreated PET, highly transparent PET, annealed PET, UV cut PET, heat shielding PET, anti-fog PET, hard coat PET, blasted PET; transparent PI, and the like.

### [Method for producing window material]

The method for producing the window material is not particularly limited, and examples thereof include a method of coating a base material sheet with an adhesive composition to produce an adhesive sheet, and then pasting the adhesive sheet on a light-transparent base material, and the like. The adhesive layer may be formed by directly coating the light-transparent base material with the adhesive composition. In this case, it is preferable to cover the exposed surface of the adhesive layer formed on the light-transparent base material with a base material sheet so that a tacky surface of the adhesive layer is not exposed indoors or outdoors. Furthermore, when the light-transmitting base material layer includes two or more light-transparent base material layers like the second window material 20, the method also includes a method of arranging an adhesive layer between the light-transparent base material layers, and the like. In this case, after coating one base material layer with an adhesive composition to form an adhesive layer, another base material layer may be pasted onto the exposed surface of the adhesive layer. Furthermore, the second window material 20 including an adhesive layer between light-transparent base materials can be produced by preparing two laminated bodies in which one light-transparent base material layer and one adhesive layer are laminated so that they are in contact with each other, and pasting the two laminated bodies together on the exposed surface of the adhesive layer.

### [Application]

The mode of use of the window material mentioned above is not particularly limited. The mode of use of the window material mentioned above can be appropriately selected depending on the purposes. The window material mentioned above can be suitably used, for example, in architectures such as houses, buildings, warehouses, and arcades, as well as in vehicles, ships, and aircraft.

### <<Light-transparent roof material>>

FIG. 3 is a sectional view showing an example of a light-transparent roof material. As shown in FIG. 3, in the light-transparent roof material 30, a light-transparent base material layer 31, an adhesive layer 32, and a base material sheet 33 are laminated in this order. The adhesive layer 32 includes an adhesive composition including a temperature-sensitive adhesive agent 32a and polymer fine particles 32b.

In FIG. 3, in the temperature-sensitive adhesive agent 32a, a refractive index increases with a decrease in temperature, and the refractive index increasing rate as an amount of increase in the refractive index per 1°C is larger near the melting point than in a temperature range not near the melting point. Therefore, when the temperature of the adhesive layer 32 rises by solar radiation or air temperature, the difference in the refractive index between the polymer fine particles 32b and the temperature-sensitive adhesive agent 32a increases, and the haze value becomes higher. On the other hand, when the temperature of the adhesive layer 32 decreases, the difference in the refractive index between the polymer fine particles 32b and the temperature-sensitive adhesive agent 32a decreases, and the haze value decreases. This can allow the degree of cloudiness to change autonomously in response to temperatures, soften direct sunlight during high temperatures in summer, and allow sunlight to enter during low temperatures in winter. A difference in the refractive index between the polymer fine particles 32b and the temperature-sensitive adhesive agent 32a can also be designed to be smaller with an increase in temperature.

Furthermore, in the adhesive composition constituting the adhesive layer 32, the adhesive force decreases with a decrease in temperature, and the adhesive force reduction rate as an amount of decrease in the adhesive force per 1°C is larger near a melting point of the temperature-sensitive adhesive agent 32a in the adhesive composition than in a temperature range not near the melting point. Therefore, even if air bubbles are entrained or wrinkles are formed when the adhesive layer 32 is disposed, the adhesive layer 32 can be peeled off and disposed again by decreasing the temperature of the adhesive layer 32. Thereby, the window materials can be manufactured more easily.

For the light-transparent roof material, layers including the light-transparent base material layer, the adhesive layer, and the base material sheet, the production method, and application of use are the same as the layers, the production method, and the application of use for the window material.

### <<Adhesive composition>>

The adhesive composition contains 1 to 100 parts by mass of polymer fine particles with respect to 100 parts by mass of a temperature-sensitive adhesive agent.

The refractive index of the temperature-sensitive adhesive agent increases with a decrease in temperature, and the refractive index increasing rate, as an amount of increase in the refractive index per 1°C, is larger near the melting point than in a temperature range not near the melting point. When each refractive index is adjusted so that a difference between the refractive index of the polymer fine particles and the refractive index of the temperature-sensitive adhesive agent at low temperatures becomes smaller, when the temperature of the adhesive layer formed of adhesive compositions increases due to solar radiation, air temperature, or warming, a difference between the refractive index of the polymer fine particles and the refractive index of the temperature-sensitive adhesive agent becomes larger, and a haze value becomes higher. On the other hand, when the temperature of the adhesive layer decreases, the difference between the refractive index of the polymer fine particles and the refractive index of the temperature-sensitive adhesive agent becomes smaller, and a haze value becomes lower. On the contrary, when each refractive index is adjusted so that a difference between the refractive index of the polymer fine particles and the refractive index of the temperature-sensitive adhesive agent becomes small at high temperatures, the haze value decreases as the temperature of the adhesive layer increases, and the haze value increases as the temperature of the adhesive layer decreases. As a result, in the former case, when an adhesive layer is disposed on the window material, light-transparent roof material, or the like, the degree of cloudiness can be autonomously changed in response to temperatures, and direct sunlight can be softened during high temperatures in summer, and sunlight can be allowed to enter during low temperatures in winter. Furthermore, when an adhesive layer is formed using an adhesive composition so that designs such as a character, a symbol, a pattern, a figure, a picture, and the like, are drawn, when a haze appears or disappears due to high temperatures by heat sources such as lighting, sunlight, and air temperature, the design can be allowed to appear or disappear. This makes it possible to impart excellent display properties (designs such as a character, and a symbol) and decorative properties (designs such as a pattern, a figure, and a picture) to the object provided with the adhesive layer. Furthermore, in any cases, when an adhesive sheet including the adhesive layer is used, a haze value of the adhesive layer become lower or higher, so that even when a contact surface thermometer is not provided, change of the adhesive force can be visually recognized.

In the adhesive composition, the adhesive force decreases with a decrease in temperature, and the adhesive force reduction rate as an amount of decrease in the adhesive force per 1°C is larger near a melting point of the temperature-sensitive adhesive agent in the adhesive composition than in a temperature range not near the melting point. Therefore, even if air bubbles are entrained or wrinkles are formed when the adhesive layer is disposed, the adhesive layer can be peeled off and disposed again by increasing the temperature of the adhesive layer. Furthermore, it is possible to firmly temporarily fix and peel off workpieces and the like in the manufacturing process without destroying the workpieces.

### (Polymer fine particles)

The average particle diameter of polymer fine particles is preferably 0.1 µm or more, and more preferably 1 µm or more. Furthermore, the average particle diameter is preferably 100 µm or less, more preferably 30 µm or less, and still more preferably 10 µm or less. In particular, from the viewpoint of easily increasing the haze, the average particle diameter is still more preferably 0.1 µm or more and 10 µm or less, and most preferably 1 µm or more and 6 µm or less. From the viewpoint of easily suppressing the transmission of solar radiation, the average particle diameter is still more preferably 6 µm or more and 25 µm or less, and most preferably 6 µm or more and 10 µm or less. From the viewpoint of easily shielding heat, the average particle diameter is still more preferably 6 µm or more and 25 µm or less, and most preferably 6 µm or more and 10 µm or less. Furthermore, the D90 particle diameter of the polymer fine particles is preferably not more than the thickness of the adhesive layer, and is, for example, 1 µm or more and 1000 µm or less, and 3 µm or more and 100 µm or less. When the D90 particle diameter is not more than the thickness of the adhesive layer, the surface of the adhesive layer becomes uniform and the adhesive force tends to be less likely to be impaired.

A polymer constituting the polymer fine particles preferably includes a constituent unit derived from a monomer including one ethylenic unsaturated group. Preferably examples of the ethylenic unsaturated group include a (meth)acryloyl group, a (meth)acrylamide group, a vinyl group, and a (meth)allyl group, and the like, and a (meth)acryloyl group, and a vinyl group are preferable.

Monomers containing one ethylenically unsaturated group include (meth)acrylic acid; (meth)acrylate such as methyl(meth)acrylate, ethyl(meth)acrylate, butyl(meth)acrylate, isobornyl(meth)acrylate, benzyl(meth)acrylate, and hydroxyethyl(meth)acrylates; vinyl monomers such as styrene, vinyl acetate, and acrylonitrile; and the like. These may be used alone or in combination of two or more.

The ratio of the mass of the constituent unit derived from the monomer containing one ethylenically unsaturated group to the mass of the polymer constituting the polymer fine particles is preferably 70% by mass or more, more preferably 80% by mass or more, and still more preferably 90% by mass or more. The above ratio may be 100% by mass, but is preferably 98% by mass or less.

The polymer constituting the polymer fine particles may include a constituent unit derived from any other monomer copolymerizable with a monomer including one ethylenic unsaturated group. Examples of other monomers include polyfunctional monomers, refractive index adjusting monomers, and the like. In other words, the polymer constituting the polymer fine particles may include a constituent unit derived from a polyfunctional monomer, or a refractive index adjusting monomer.

The polyfunctional monomer can crosslink a plurality of molecular chains included in the polymer constituting the polymer fine particles. From the viewpoint of the dispersion state of the polymer fine particles during use, suppressing deformation, and maintaining repeatability of functions, the polymer constituting the polymer fine particles preferably includes a constituent unit derived from a polyfunctional monomer. In other words, the polymer fine particles and a polymer constituting the polymer fine particles are preferably crosslinked. The polyfunctional monomer has two or more, preferably 2 to 4, radically polymerizable double bonds in the molecule. Examples of the polyfunctional monomer include bifunctional (meth)acrylate, trifunctional (meth)acrylate, tetrafunctional (meth)acrylate, and the like. Specific examples include 1,6-hexanediol di(meth)acrylate, 1,9-nonanediol di(meth)acrylate, trimethylolpropane tri(meth)acrylate, pentaerythritol tetra(meth)acrylate, polyethylene glycol 200 di(meth)acrylate, ethoxylated bisphenol A di(meth)acrylate, and the like. These may be used alone or in combination of two or more of these. The polyfunctional monomer may be at least one selected from bifunctional (meth)acrylate, trifunctional (meth)acrylate, and tetrafunctional (meth)acrylate.

The ratio of the mass of the constituent unit derived from the polyfunctional monomer to the mass of the polymer constituting the polymer fine particles is preferably 0.1% by mass or more, and more preferably 1% by mass or more. Furthermore, the above ratio is preferably 20% by mass or less, and more preferably 10% by mass or less.

The refractive index adjusting monomer may be a monomer having a refractive index of 1.300 to 1.600. Examples of the refractive index adjusting monomer include 2-(O-phenylphenoxy)ethyl acrylate (refractive index: 1.577), 2-propenoic acid (3-phenoxyphenyl)methyl ester (refractive index: 1.566), 1-naphthyl acrylate (refractive index: 1.595), acrylamide (refractive index: 1.515), hydroxyacrylamide (refractive index: 1.515), EO-modified bisphenol A diacrylate (refractive index: 1.537), acrylamide (refractive index: 1.515), 2,2,2-trifluoroethyl acrylate (refractive index: 1.348), methacryl-modified polydimethylsiloxane (refractive index: 1.408), and the like. These may be used alone or in combination of two or more of these.

The ratio of the mass of the constituent unit derived from the refractive index adjusting monomer to the mass of the polymer constituting the polymer fine particles is preferably 0.1% by mass or more, and more preferably 1% by mass or more. Furthermore, the above ratio is preferably 30% by mass or less, more preferably 20% by mass or less, and still more preferably 10% by mass or less.

Since dispersibility in a temperature-sensitive adhesive agent tends to be good, the polymer fine particles preferably do not include a constituent unit derived from a reactive emulsifier. A reactive emulsifier is an emulsifier having a polymerizable unsaturated bond such as a vinyl group in its molecule. A reactive emulsifier is a polymerizable monomer that has an emulsifying function and has a polymerizable group having an unsaturated bond such as a vinyl group in its molecule, and a hydrophilic group.

In the adhesive composition, the content of the polymer fine particles is 1 part by mass or more and 100 parts by mass or less with respect to 100 parts by mass of the temperature-sensitive adhesive agent. The content is preferably 5 parts by mass or more, and more preferably 20 parts by mass or more. Furthermore, the above content is preferably 70 parts by mass or less, and more preferably 40 parts by mass or less.

The method for producing polymer fine particles is not particularly limited, and conventionally known polymerization methods such as miniemulsion polymerization and suspension polymerization can be employed.

### (Temperature-sensitive adhesive agent)

A temperature-sensitive adhesive agent has a melting point. The temperature-sensitive adhesive agent crystallizes at temperatures less than the melting point, and undergoes a phase transition and exhibits fluidity at temperatures of the melting point or higher. As a result, in an adhesive composition including a temperature-sensitive adhesive agent, the adhesive force decreases with a decrease in temperature, and the adhesive force reduction rate as an amount of decrease in adhesive force per 1°C is larger near the melting point of the temperature-sensitive adhesive agent in the adhesive composition than in a temperature range not near the melting point.

The peel strength of the adhesive composition against polyethylene terephthalate (PET) at 23°C is preferably 1.0 N/25 mm or less. The lower limit of the peel strength is not particularly limited. Furthermore, the peel strength of the adhesive composition against polyethylene terephthalate (PET) at 60°C is preferably 1.0 N/25 mm or more. The upper limit of the peel strength is not particularly limited.

The melting point of the temperature-sensitive adhesive agent is preferably 25°C or more, and more preferably 40°C or more. Furthermore, the melting point is preferably 70°C or less, and more preferably 60°C or less.

The melting point of the temperature-sensitive adhesive agent can be adjusted, for example, by changing the composition of the monomer components constituting the side chain crystalline polymer included in the temperature-sensitive adhesive agent. Specifically, for example, by changing the length of the side chain in the side chain crystalline polymer, the melting point can be adjusted. When the length of the side chain is long, the melting point of the temperature-sensitive adhesive agent tends to be high.

FIG. 4 is a graph showing a change of the refractive index with respect to a change of the temperature in the temperature-sensitive adhesive agent (melting point: 55°C) produced in Examples described below. As shown in FIG. 4, the refractive index of the temperature-sensitive adhesive agent increases with a decrease in temperature, and the refractive index increasing rate as an amount of increase in the refractive index per 1°C is larger near the melting point than in a temperature range not near the melting point.

The refractive index of the temperature-sensitive adhesive agent at 23°C is preferably higher by 0.02 or more than the refractive index of the temperature-sensitive adhesive agent at 60°C. This tends to make it easier to visually recognize changes in degree of cloudiness depending on temperature.

It is preferable that the temperature-sensitive adhesive agent includes a side chain crystalline polymer. The side chain crystalline polymer preferably includes a constituent unit derived from a (meth)acrylic monomer including a linear alkyl group having 14 or more carbon atoms. In the constituent unit derived from a (meth)acrylic monomer including a linear alkyl group having 14 or more carbon atoms, the linear alkyl group having 14 or more carbon atoms acts as a side chain crystalline site in the side chain crystalline polymer. In other words, the side chain crystalline polymer is, for example, a comb-shaped polymer including a linear alkyl group having 14 or more carbon atoms in the side chain. When the side chains are aligned in an ordered arrangement by intermolecular force or the like, the side chain crystalline polymer is crystallized. Note that the above-mentioned (meth)acrylic monomer is an acrylic monomer or a methacrylic monomer. The upper limit of the number of carbon atoms in the linear alkyl group is preferably 50 or less, more preferably 30 or less.

Examples of the (meth)acrylic monomer including a linear alkyl group having 14 or more carbon atoms include cetyl (meth)acrylate, stearyl (meth)acrylate, eicosyl (meth)acrylate, behenyl (meth)acrylate, and the like. These may be used alone or in combination of two or more of these.

The ratio of the mass of the constituent unit derived from the (meth)acrylic monomer including a linear alkyl group having 14 or more carbon atoms to the mass of the side chain crystalline polymer is preferably 30% by mass or more, and more preferably 40% by mass or more. The above ratio is preferably 90% by mass or less, more preferably 70% by mass or less, and still more preferably 60% by mass or less.

The side chain crystalline polymer preferably includes a constituent unit derived from a (meth)acrylic monomer including a linear alkyl group having 1 or more and 12 or less carbon atoms, or a constituent unit derived from a functional group monomer for crosslinking. Furthermore, the side chain crystalline polymer may include constituent units derived from other monomers copolymerizable with these monomers. Examples of other monomers include refractive index adjusting monomers, and the like. In other words, the side chain crystalline polymer may include a constituent unit derived from a refractive index adjusting monomer.

Examples of (meth)acrylic monomers including a linear alkyl group having 1 or more and 12 or less carbon atoms include methyl (meth)acrylate, ethyl (meth)acrylate, propyl (meth)acrylate, butyl (meth)acrylate, pentyl (meth)acrylate, hexyl (meth)acrylate, and the like. These may be used alone or in combination of two or more of these. Among these, methyl (meth)acrylate is preferable in that it has high cohesive force and can easily suppress the decrease in adhesive force when the temperature rises.

The ratio of the mass of the constituent unit derived from a (meth)acrylic monomer including the linear alkyl group having 1 or more and 12 or less carbon atoms to the mass of the side chain crystalline polymer is preferably 1% by mass or more, more preferably 20% by mass or more, and still more preferably 40% by mass or more. The above ratio is preferably 69% by mass or less, and more preferably 60% by mass or less.

Examples of functional group monomers include (meth)acrylates having a hydroxyalkyl group such as hydroxyethyl (meth)acrylate, hydroxypropyl (meth)acrylate, and hydroxyhexyl (meth)acrylate; ethylenically unsaturated monomers having a carboxyl group such as acrylic acid, methacrylic acid, crotonic acid, itaconic acid, maleic acid, and fumaric acid; and the like. These may be used alone or in combination of two or more of these.

The ratio of the mass of the constituent unit derived from the functional group monomer to the mass of the side chain crystalline polymer is preferably 1% by mass or more, and more preferably 3% by mass or more. Furthermore, the above ratio is preferably 20% by mass or less, and more preferably 10% by mass or less. When the ratio is 1% by mass or more, the shape retention property tends to be good. When the ratio is 20% by mass or less, the viscosity is not excessively high and coating property tends to be good.

The refractive index adjusting monomer may be a monomer having a refractive index of 1.300 to 1.600. Examples of the refractive index adjusting monomer include 2-(O-phenylphenoxy)ethyl acrylate (refractive index: 1.577), 2-propenoic acid (3-phenoxyphenyl) methyl ester (refractive index: 1.566), 1-naphthyl acrylate (refractive index: 1.595), acrylamide (refractive index: 1.515), hydroxyacrylamide (refractive index: 1.515), EO-modified bisphenol A diacrylate (refractive index: 1.537), acrylamide (refractive index: 1.515), 2,2,2-trifluoroethyl acrylate (refractive index: 1.348), methacryl-modified polydimethylsiloxane (refractive index: 1.408), and the like. These may be used alone or in combination of two or more of these.

The ratio of the mass of the constituent unit derived from the refractive index adjusting monomer to the mass of the side chain crystalline polymer is preferably 0.1% by mass or more, more preferably 1% by mass or more, and still more preferably 10% by mass or more. Furthermore, the above ratio is preferably 30% by mass or less.

The weight average molecular weight of the temperature-sensitive adhesive agent is preferably 200,000 or more, and more preferably 400,000 or more. The above weight average molecular weight is preferably 2,000,000 or less, and more preferably 1,000,000 or less. When the weight average molecular weight is 200,000 or more, the adhesive force tends to be sufficient. When the weight average molecular weight is 2,000,000 or less, the viscosity decreases and the coating property tends to be sufficient.

The weight average molecular weight of the temperature-sensitive adhesive agent can be adjusted, for example, by using a chain transfer agent during polymerization. Examples of the chain transfer agent include thiol compounds such as dodecylmercaptan, mercaptopropionic acid, mercaptosuccinic acid, ethylhexylmercaptoacetate, mercaptoethanol, and cyclohexanethiol. These may be used alone or in combination of two or more of these.

The difference in the refractive index at 23°C between the temperature-sensitive adhesive agent and the polymer fine particles is preferably less than 0.015, and more preferably less than 0.010. Furthermore, the refractive index difference at 60°C is preferably 0.015 or more. The upper limit of the refractive index difference at 60°C is not particularly limited, but is, for example, 0.1.

The ratio of the mass of the temperature-sensitive adhesive agent to the mass of the solid content of the adhesive composition is not particularly limited, but is, for example, 50% by mass or more and 95% by mass or less.

The method for producing the temperature-sensitive adhesive agent is not particularly limited, and conventionally known polymerization methods such as solution polymerization and UV polymerization can be employed.

The adhesive composition may contain a crosslinking agent for crosslinking the temperature-sensitive adhesive agent. In other words, the temperature-sensitive adhesive agent may be crosslinked. Examples of the crosslinking agents used include aziridine crosslinking agents, metal chelate crosslinking agents, epoxy crosslinking agents, isocyanate crosslinking agents, and the like.

In the adhesive composition, the content of the crosslinking agent is not particularly limited, but is, for example, 0.1 parts by mass or more and 10 parts by mass or less with respect to 100 parts by mass of the temperature-sensitive adhesive agent. When the content is 0.1 parts by mass or more, the shape retention property tends to be less likely to decrease. Furthermore, when the content is 10 parts by mass or less, high adhesive force tends to be easily exhibited.

The adhesive composition may include a solvent such as an organic solvent, an inhibitor that suppresses the progress of crosslinking, an adhesion giving resin (tackifier), an ultraviolet (UV) absorber, a light stabilizer (HALS), an antioxidant, an infrared absorber, and other additives such as dyes and pigments.

### <<Adhesive sheet>>

The adhesive sheet includes an adhesive layer including an adhesive composition.

As described above, the temperature-sensitive dimming liquid laminated body of Patent Document 1 requires a dedicated structure body for maintaining the shape of the temperature-sensitive dimming liquid. Therefore, when installing it later on existing windows or roofs, large-scale construction work such as replacing the entire window is required, which makes it difficult to be introduced.

On the other hand, it is advantageous that adhesive sheets do not require a dedicated structure body to maintain their shape, and can be easily installed by simply pasting them onto existing windows or roofs, and can autonomously change the degree of cloudiness in response to temperatures.

A thickness of the adhesive layer is not particularly limited, but is preferably 5 µm or more and 1 mm or less, and more preferably 10 µm or more and 100 µm or less. Note here that the thicker the adhesive layer is, the more the dimming function tends to be exhibited with addition of a small amount of polymer fine particles. The thinner the thickness is, the more polymer fine particles tend to need to be added in order to exhibit the light dimming function.

In the adhesive layer, the difference between the haze value at 23°C and the haze value at 60°C is preferably 10% or more. In particular, the haze value of the adhesive layer at 60°C is preferably higher by 10% or more than the haze value at 23°C. This tends to make it easier to visually recognize a change in the degree of cloudiness depending on temperature.

The haze value of the adhesive layer at 23°C is preferably 20% or less, and more preferably 10% or less. The lower limit of the haze value at 23°C is not particularly limited. Furthermore, the haze value of the adhesive layer at 60°C is preferably 12% or more, and more preferably 20% or more. The upper limit of the haze value at 60°C is not particularly limited, but is, for example, 70% or less, and 50% or less.

In the adhesive layer, the difference between the transmittance of solar radiation at 23°C and the transmittance of solar radiation at 60°C is preferably 10% or more. The transmittance of solar radiation through the adhesive layer at 60°C is preferably lower by 10% or more than the transmittance of solar radiation at 23°C. Note here that in this specification, the transmittance of solar radiation through the adhesive layer is a value measured by the method described in the below-mentioned Examples.

The transmittance of solar radiation of the adhesive layer at 23°C is preferably 30% or more, and more preferably 40% or more. The upper limit of the transmittance of solar radiation at 23°C is not particularly limited, but is, for example, 95% or less, or 85% or less. Furthermore, the transmittance of solar radiation through the adhesive layer at 60°C is preferably 60% or less, more preferably 40% or less, and still more preferably 30% or less. The lower limit of the transmittance of solar radiation at 60°C is not particularly limited, and is, for example, 5% or more or 15% or more.

The adhesive sheet may include a base material sheet. The base material constituting the base material sheet is not particularly limited as long as it is a light-transparent base material. As a base material, for example, PET such as corona treated PET, untreated PET, highly transparent PET, annealed PET, UV cut PET, heat shielding PET, anti-fog PET, hard coat PET, blasted PET; transparent PI, and the like, can be used.

The adhesive layer may be formed only on one surface of the base material sheet, or may be formed on both surfaces. Alternatively, an adhesive layer may be formed on one surface of the base material sheet, and an adhesive layer other than the adhesive layer described above may be formed on the other surface.

A release sheet may be laminated on the surface of the adhesive layer in the same manner as the base material sheet.

The adhesive sheet can be produced by a usual method using the adhesive composition described above. For example, a method may be used in which a coating solution prepared by adding a solvent and a crosslinking agent to an adhesive composition as necessary is applied to a base material sheet using a coater or the like, and then dried by heating or the like to form an adhesive layer.

Examples of the coater include a knife coater, roll coater, calendar coater, comma coater, and the like. Furthermore, depending on the coating thickness and the viscosity of the coating liquid, gravure coater, rod coater, and the like, may also be used.

### <<Processing method of workpiece>>

In the adhesive sheet mentioned above, since the adhesive force decreases with a decrease in temperature and the adhesive force reduction rate is larger near a melting point of a temperature-sensitive adhesive agent than in a temperature range not near the melting point, by adjusting the temperature, workpieces in the manufacturing process can be firmly temporarily fixed and peeled off without destroying the workpiece. In addition, since the refractive index of the temperature-sensitive adhesive agent increases with a decrease in temperature, and the refractive index increasing rate is larger near the melting point than in a temperature range not near the melting point, when a haze value of the adhesive layer becomes lower or higher, a change of the adhesive force can be visually recognized in a scene in which a contact surface thermometer is not provided (for example, when each refractive index is adjusted so that a difference in the refractive index between the polymer fine particles and the temperature-sensitive adhesive agent is larger during high temperatures, exhibition of the adhesive force can be visually recognized by the fact that the adhesive layer is cloudy, and when each refractive index is adjusted so that a difference in the refractive index becomes smaller, exhibition of the adhesive force can be visually recognized by the fact that the adhesive layer is not cloudy). Therefore, the adhesive sheet mentioned above can be suitably used for the processing method of a workpiece of the following (1) or (2).
(1) A processing method of a workpiece, the method including: (a) bringing a workpiece into contact with the adhesive layer of the above adhesive sheet, (b) confirming that the adhesive layer exhibits adhesive force by confirming that the adhesive layer is cloudy or is not cloudy, (c) processing the workpiece fixed to the adhesive layer by the adhesive force exhibited by the adhesive layer, (d) confirming that the adhesive layer does not exhibit adhesive force by confirming that the adhesive layer is not cloudy or is cloudy, and (e) removing the above processed workpiece from the adhesive layer not exhibiting the adhesive force.
(2) A processing method of a workpiece, the method including: (a') bringing a support and a workpiece, or workpieces into contact with each other via the adhesive layer of the adhesive sheet mentioned above, (b') confirming that the adhesive layer exhibits adhesive force by confirming that the adhesive layer is cloudy or is not cloudy, (c') processing the workpiece fixed to the support via the adhesive layer, or at least one of a plurality of the workpieces fixed to the support via the adhesive layer by the adhesive force exhibited by the adhesive layer, (d') confirming that the adhesive layer does not exhibit adhesive force by confirming that the adhesive layer is not cloudy or is cloudy; and (e') removing the processed workpiece from the adhesive layer not exhibiting the adhesive force.

In (a), using, for example, an adhesive sheet including an adhesive layer and a base material sheet laminated on one surface of the adhesive layer, the adhesive layer is attached to a workpiece at a temperature that is not less than the melting point of the temperature-sensitive adhesive agent. Furthermore, in (a'), using, for example, an adhesive sheet including an adhesive layer and a release sheet laminated on one surface of the adhesive layer, or an adhesive sheet including a base material sheet, adhesive layers laminated on both surfaces of the adhesive layer, and a release sheet laminated on one of the adhesive layers, the adhesive layer is attached to a support (such as a pedestal) or a workpiece, at a temperature that is not less than the melting point of the temperature-sensitive adhesive agent. Thereafter, the release sheet is peeled off, and the other adhesive layer is attached to the other support or workpiece. In order to bring the adhesive sheet to the temperature not lower than the melting point of the temperature-sensitive adhesive agent, for example, heating means such as a heater may be used.

As mentioned above, in the above adhesive sheet, the haze value of the adhesive layer decreases or increases in response to temperatures, so that changes in the adhesive force can be visually recognized even in situations where a contact surface thermometer is not provided. Therefore, in (b) and (b'), by confirming that the adhesive layer is cloudy or not cloudy, it can be confirmed that the adhesive layer exhibits adhesive force, and that the workpiece is temporarily fixed.

In (c) and (c'), the processing method is not particularly limited, and examples thereof include grinding processing, dicing processing, die bonding, wire bonding, etching, vapor deposition, molding, circuit formation, testing, inspection, cleaning, transfer, arrangement, repair, protection of device surfaces, and the like.

In (d) and (d'), the temperature of the adhesive sheet is lower than the melting point of the temperature-sensitive adhesive agent. Then, by confirming that the adhesive layer is not cloudy or is cloudy, it can be confirmed that the adhesive layer does not exhibit adhesive force, and it can be confirmed that the workpiece can be peeled off. In order to bring the adhesive sheet to a temperature of less than the melting point of the temperature-sensitive adhesive agent, for example, a cooling means such as a fan may be used.

In (e) and (e'), since the adhesive layer does not exhibit adhesive force, the workpiece can be easily peeled off.

The workpiece is not particularly limited as long as workpieces require temporary fixation during processing, but examples thereof include electronic components such as ceramic capacitors, semiconductor chips, and LED chips, and film components such as film touch sensors, and the like.

### EXAMPLES

Hereinafter, the present invention will be described in more detail with reference to Examples, but the scope of the present invention is not limited to these Examples.

Hereinafter, various chemicals used in the examples will be collectively described.
VA: Blenmar VA (behenyl acrylate) manufactured by NOF Corporation
MMA: Methyl methacrylate manufactured by Tokyo Chemical Industry Co., Ltd.
St: Styrene manufactured by Tokyo Chemical Industry Co., Ltd. A-HD-N: A-HD-N (1,6-hexanediol diacrylate) manufactured by Shin-Nakamura Chemical Industry Co., Ltd.
C1A: Methyl acrylate manufactured by Nippon Shokubai Co., Ltd.
AA: Acrylic acid manufactured by Nippon Shokubai Co., Ltd. NF-13: Hitenol NF-13 manufactured by DKS Co., Ltd.
Perloyl L: Perloil L (dilauroyl peroxide) manufactured by NOF Corporation
Perbutyl ND: Perbutyl ND (t-butyl peroxyneodecanoate) manufactured by NOF Corporation
Perhexyl PV: Perhexyl PV (t-hexyl peroxypivalate) manufactured by NOF Corporation
PZ33: Chemitite PZ33 (aziridine-based crosslinking agent) manufactured by Nippon Shokubai Co., Ltd.

### [Production of polymer fine particles]

A monofunctional monomer, a polyfunctional monomer, and an initiator were added to a reaction vessel at the proportions shown in Table 1. The mixture in the reaction vessel was stirred with a spatula to be uniformly mixed. Next, an aqueous medium and an emulsifier at the proportions shown in Table 1 were added to the reaction vessel to obtain a mixed solution. Water was used as the aqueous medium. The aqueous medium was added so that the ratio of the mass of the monofunctional monomer to the total mass of the monofunctional monomer and the mass of the aqueous medium in the mixed liquid was 40% by mass. Furthermore, the mixed solution was stirred for 5 minutes at 7500 rpm using a homogenizer manufactured by IKA (main body: T 25 digital ULTRA-TURRAX, shaft generator: S25N-25F) to form monomer components into particles. Finally, nitrogen was introduced into the mixture, bubbled, and air (oxygen) in the mixed solution was removed, and then heated and stirred at 67°C for 2 hours and at 80°C for 2 hours to polymerize the monomer components. Then, the aqueous medium was removed from the generated fine particles by suction filtration and vacuum drying to obtain polymer fine particles 1 to 3. Polymer fine particles 4 were obtained in the same manner as in the method for producing the polymer fine particles 3, except that the mixed solution was stirred for 5 minutes at 2800 rpm using a homogenizer. Polymer fine particles 5 were obtained in the same manner as in the method for producing the polymer fine particles 3, except that the mixed solution was stirred for 2 minutes at 2800 rpm using a homogenizer.

### (Average particle diameter of polymer fine particles)

The particle size distribution of the polymer fine particles was measured using a laser diffraction particle size distribution meter "Mastersizer 3000" manufactured by Malvern. In the particle size distribution, the particle diameter corresponding to a cumulative volume frequency of 50% calculated from the smaller particle diameter of the polymer fine particles is defined as the "average particle diameter". The results are shown in Table 1.

**[Table 1]**

| | | | Fine particles 1 | Fine particles 2 | Fine particles 3 | Fine particles 4 | Fine particles 5 |
|---|---|---|---|---|---|---|---|
| Added amount (part (s) by mass) | Monofunctional monomer | MMA | 100 | 90 | 95 | 95 | 95 |
| | | St | - | 10 | 5 | 5 | 5 |
| | Polyfunctional monomer | A-HD-N | 5 | 5 | 5 | 5 | 5 |
| | Initiator | Perloyl L | 0.5 | 0.5 | 0.5 | 0.5 | 0.5 |
| | Emulsifier | NF-13 | 1 (Solid content) | 1 (Solid content) | 1 (Solid content) | 1 (Solid content) | 1 (Solid content) |
| Average particle diameter | | | 2µm | 2µm | 2µm | 8µm | 18µm |

### [Production of temperature-sensitive adhesive agent]

Monomers were charged into the reaction vessel at the proportion shown in Table 2. A solvent (ethyl acetate/heptane = 70/30 (mass ratio)) was added to the reaction vessel to dilute the monomer so that the monomer concentration was 30% by mass. Next, the diluted monomer solution was stirred and heated while nitrogen was introduced into the diluted monomer solution and bubbled. At the time when the liquid temperature reached 55°C, an initiator was added to the diluted monomer solution at the proportion shown in Table 2. Furthermore, after heating and stirring the liquid in the reaction vessel at 55°C for 4 hours, the temperature of the oil bath was raised to 80°C. At the time when the liquid temperature exceeded 70°C, a promoter was added to the reaction solution at the proportion shown in Table 2. Finally, heating and stirring were carried out at 80°C for 2 hours to obtain a temperature-sensitive adhesive agent.

### (Weight average molecular weight of temperature-sensitive adhesive agent)

Measurement was carried out by gel permeation chromatography (GPC), and the obtained measured value was converted into polystyrene. The results are shown in Table 2.

### (Melting point of temperature-sensitive adhesive agent)

Using a DSC (differential scanning calorimeter) manufactured by Seiko Instruments Inc., the melting point of the temperature-sensitive adhesive agent was measured from the temperature at the top of the endothermic peak measured in the range of -30°C to 100°C at a sweep rate of 10°C/min. The results are shown in Table 2.

**[Table 2]**

| | | | |
|---|---|---|---|
| Added amount (part (s) by mass) | Monomer | VA | 45 |
| | | C1A | 50 |
| | | AA | 5 |
| | Initiator | Perbutyl ND | 0.3 |
| | Promoter | Perhexyl PV | 0.3 |
| Weight average molecular weight | | | 600,000 |
| Melting point | | | 55°C |

### [Production of adhesive sheet]

The obtained polymer fine particles were added to a solvent agent (heptane) and stirred with a spatula to obtain a dispersion solution. The dispersion solution was added to the obtained temperature-sensitive adhesive agent. The polymer fine particles and the temperature-sensitive adhesive agent were added in the proportions shown in Tables 3 and 4, and the solvent agent was added in a proportion such that the solid content concentration was 25% by mass. An inhibitor was added to this adhesive composition in the proportions shown in Tables 3 and 4, and the obtained mixture was stirred uniformly with a spatula, and then a crosslinking agent was added in the proportions shown in Tables 3 and 4. The adhesive composition was applied to the corona-treated surface of a PET film (thickness: 100 µm) using a bar coater. Thereafter, the PET film was dried by heating at 110°C for 3 minutes in a hot air circulating oven to obtain adhesive sheets (Examples 1 to 5) including an adhesive layer (thickness: 40 µm) including a crosslinked adhesive composition.

### (Refractive indices of polymer fine particles and temperature-sensitive adhesive agent)

The refractive indices of the obtained polymer fine particles and temperature-sensitive adhesive agent at 23°C and 60°C were measured using an automatic refractometer "Abbemat 350" manufactured by Anton Paar. The results are shown in Tables 3 and 4.

### (Haze value of adhesive layer)

The haze values of the adhesive layer of the obtained adhesive sheet at 23°C and 60°C were measured in accordance with ASTM D1003 using a spectrophotometer "CM3600" (C light source) manufactured by Konica Minolta, Inc. With ITO glass as a reference, measurement was carried out by pasting the adhesive sheet on the ITO glass surface. The results are shown in Tables 3 and 4.

### (Peel strength)

The 180° peel strengths of the obtained adhesive sheet against polyethylene terephthalate (PET) at 23°C and 60°C were measured in accordance with JIS Z0237. Specifically, the adhesive sheet was pasted to PET, left to stand for 20 minutes, and then peeled off by 180° using a load cell at a speed of 300 mm/min. As PET, an untreated film having a thickness of 25 µm was used. The adhesive sheet was pasted to PET by moving a 2kg roller back and forth 5 times on the adhesive sheet. The results are shown in Tables 3 and 4. Note here that the peel strength was measured for the adhesive sheet also at temperatures between 23°C and 60°C to confirm a change in the adhesive force reduction rate as an amount of decrease in the adhesive force per 1°C of the adhesive sheet. As a result, it is found that the adhesive force reduction rate was larger near 55°C being a melting point of the temperature-sensitive adhesive agent than in a temperature range not near the melting point of the temperature-sensitive adhesive agent.

### (Transmittance of solar radiation)

For the obtained adhesive sheets, transmittances of solar radiation at 23°C and 60°C were measured using a spectrophotometer "V770DS" manufactured by JASCO Corporation in accordance with JIS A5759:2016 6.5**.** However, since the measurement was carried out after warming to 60°C, ITO glass (GMT-100-12, manufactured by Geomatec Co., Ltd.) having a thickness of 1.1 mm was used as an object to which the adhesive sheet was attached. Specifically, a test piece was prepared by attaching the adhesive sheet on one surface of the ITO glass. At 23°C and 60°C (the surface temperatures of the ITO glass, measured by a contact surface thermometer), the spectral transmittance of each wavelength from 300 to 2500 nm was measured using a spectrophotometer with the glass surface of the test piece facing the light source. The transmittance of solar radiation was calculated based on the relative spectral distribution of solar radiation as specified in JIS A5759:2016. The results are shown in Tables 3 and 4.

### (Heat shielding property)

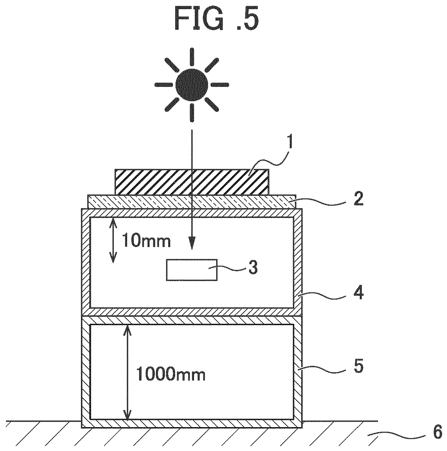

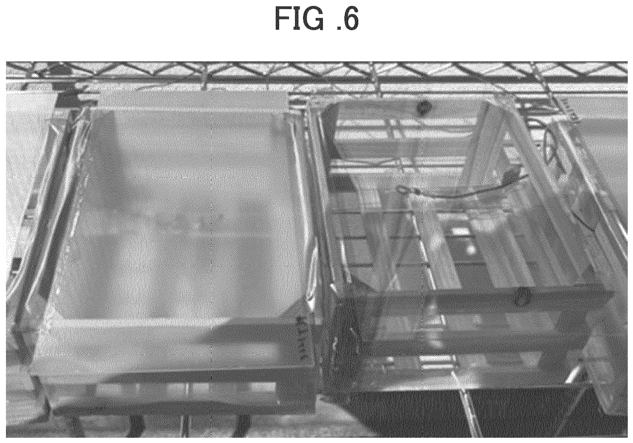

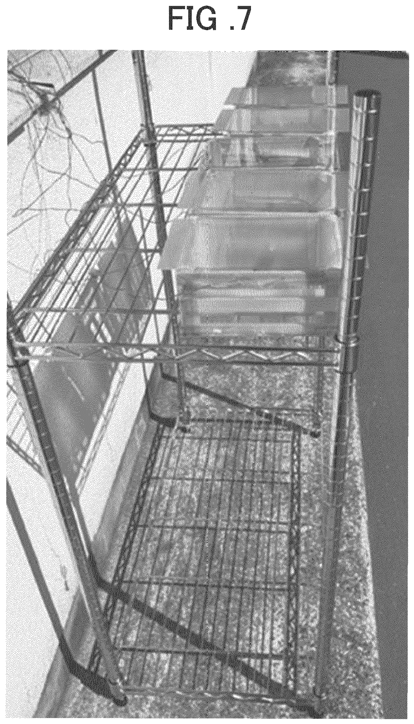

The heat shielding properties of the obtained adhesive sheets were evaluated as shown in FIGs. 5 to 7. Specifically, a test piece was prepared by attaching an adhesive sheet 1 onto a glass plate 2. The test piece was placed as a top surface on a wooden frame 4 measuring 120 mm in width x 200 mm in depth x 100 mm in height so that the adhesive sheet surface faced upward. A thermometer (thermocouple) 3 was disposed at a position 10 mm below the glass surface. The side surfaces and the bottom surface of the wooden frame 4 were covered with polyethylene sheets as a windbreak. The wooden frame 4 on which the test piece was placed was disposed on a metal rack 5 so that the height from the ground 6 was 1000 mm. The temperature rise value of the thermocouple 3 was recorded during solar radiation (solar radiation time: about 360 minutes, average temperature: 32°C). A glass plate to which no adhesive sheet was attached was used as a blank test piece, and the temperature rise value was recorded in the same manner. The difference from the temperature rise value of the blank was calculated. The results are shown in Tables 3 and 4.

**[Table 3]**

| | | | Example 1 | Example 2 |
|---|---|---|---|---|
| Added amount (part(s) by mass) | Temperature-sensitive adhesive agent | | 100 (Solid content) | 100 (Solid content) |
| | Polymer fine particle | | Fine particles 1 30 | Fine particles 2 30 |
| | Crosslinking agent | PZ33 | 0.5 | 0.5 |
| | Inhibitor | Triethylamine | 8 | 8 |
| Refractive index of polymer fine particle | | 60°C | 1.486 | 1.492 |
| | | 23°C | 1.491 | 1.509 |
| Refractive index of temperature-sensitive adhesive agent | | 60°C | 1.464 | 1.464 |
| | | 23°C | 1.498 | 1.498 |
| Haze of adhesive layer (%) | | 60°C | 25 | 68 |
| | | 23°C | 5 | 16 |
| Peel strength against PET (N/25mm) | | 60°C | 3.0 | 3.2 |
| | | 23°C | 0.01 | 0.01 |

As is apparent from Table 3, according to Examples 1 and 2, it can be seen that the adhesive layers of Examples 1 and 2 having the above-mentioned predetermined configuration can autonomously change the degree of cloudiness in response to temperatures. Furthermore, it can be seen that by decreasing the temperature, the adhesive force decreases. Therefore, from Examples 1 and 2, it can be seen that window materials and light-transparent roof materials including the above-mentioned adhesive layer can autonomously change the degree of cloudiness in response to temperatures, and manufacture is easy because the adhesive layer can be peeled off and disposed again.

**[Table 4]**

| | | | Example 3 | Example 4 | Example 5 |
|---|---|---|---|---|---|
| Added amount (part (s) by mass) | Temperature-sensitive adhesive agent | | 100 (Solid content) | 100 (Solid content) | 100 (Solid content) |
| | Polymer fine particle | | Fine particles 3 30 | Fine particles 4 30 | Fine particles 5 30 |
| | Crosslinking agent | PZ33 | 0.5 | 0.5 | 0.5 |
| | Inhibitor | Triethylamine | 8 | 8 | 8 |
| Refractive index of polymer fine particle | | 60°C | 1.489 | 1.489 | 1.489 |
| | | 23°C | 1.500 | 1.500 | 1.500 |
| Refractive index of temperature-sensitive adhesive agent | | 60°C | 1.464 | 1.464 | 1.464 |
| | | 23°C | 1.498 | 1.498 | 1.498 |
| Haze of adhesive layer (%) | | 60°C | 59 | 58 | 57 |
| | | 23°C | 11 | 15 | 17 |
| Transmittance of solar radiation | | 60°C | 47.3 | 21.1 | 26.1 |
| | | 23°C | 76.9 | 48.9 | 58.9 |
| Heat shielding property | | | 1.1°C | 2.8°C | 2.6°C |
| Peel strength against PET (N/25mm) | | 60°C | 3.1 | 3.2 | 3.4 |
| | | 23°C | 0.03 | 0.03 | 0.03 |

### EXPLANATION OF REFERENCE NUMERALS

10 first window material
11 light-transparent base material layer
12 adhesive layer
12a temperature-sensitive adhesive agent
12b polymer fine particles
13 base material sheet
20 second window material
21a, 21b light-transparent base material layer
22 adhesive layer
22a temperature-sensitive adhesive agent
22b polymer fine particles
30 light-transparent roof material
31 light-transparent base material layer
32 adhesive layer
32a temperature-sensitive adhesive agent
32b polymer fine particles
33 base material sheet

## Claims

1. A window material comprising:
at least one layer of a light-transparent base material layer and at least one layer of an adhesive layer,
the adhesive layer comprising an adhesive composition comprising 1 to 100 parts by mass of polymer fine particles with respect to 100 parts by mass of a temperature-sensitive adhesive agent,
a refractive index of the temperature-sensitive adhesive agent increasing with a decrease in temperature,
a refractive index increasing rate as an amount of increase in the refractive index per 1°C of the temperature-sensitive adhesive agent being larger near a melting point of the temperature-sensitive adhesive agent than in a temperature range not near the melting point of the temperature-sensitive adhesive agent,
adhesive force of the temperature-sensitive adhesive composition decreasing with a decrease in temperature, and
an adhesive force reduction rate as an amount of decrease in the adhesive force per 1°C of the adhesive composition being larger near the melting point of the temperature-sensitive adhesive agent than in a temperature range not near the melting point of the temperature-sensitive adhesive agent.

2. The window material according to claim 1, wherein the temperature-sensitive adhesive agent comprises a side chain crystalline polymer, and
the side chain crystalline polymer comprises 30 to 90% by mass of a constituent unit derived from a (meth)acrylic monomer comprising a linear alkyl group having 14 or more carbon atoms.

3. The window material according to claim 1, wherein a difference between a haze value of the adhesive layer at 60°C and a haze value of the adhesive layer at 23°C is 10% or more.

4. A light-transparent roof material comprising:
at least one layer of a light-transparent base material layer and at least one layer of an adhesive layer,
the adhesive layer comprising an adhesive composition comprising 1 to 100 parts by mass of polymer fine particles with respect to 100 parts by mass of a temperature-sensitive adhesive agent,
a refractive index of the temperature-sensitive adhesive agent increasing with a decrease in temperature,
a refractive index increasing rate as an amount of increase in the refractive index per 1°C of the temperature-sensitive adhesive agent being larger near a melting point of the temperature-sensitive adhesive agent than in a temperature range not near the melting point of the temperature-sensitive adhesive agent,
adhesive force of the temperature-sensitive adhesive composition decreasing with a decrease in temperature, and
an adhesive force reduction rate as an amount of decrease in the adhesive force per 1°C of the adhesive composition being larger near the melting point of the temperature-sensitive adhesive agent than in a temperature range not near the melting point of the temperature-sensitive adhesive agent.

5. The light-transparent roof material according to claim 4, wherein the temperature-sensitive adhesive agent comprises a side chain crystalline polymer, and
the side chain crystalline polymer comprises 30 to 90% by mass of a constituent unit derived from a (meth)acrylic monomer comprising a linear alkyl group having 14 or more carbon atoms.

6. The light-transparent roof material according to claim 4, wherein a difference between a haze value of the adhesive layer at 60°C and a haze value of the adhesive layer at 23°C is 10% or more.

7. An architecture comprising the window material according to any one of claim 1 to claim 3, and/or the light-transparent roof material according to any one of claim 4 to claim 6.

8. A vehicle, a ship, or an aircraft comprising the window material according to any one of claim 1 to claim 3, and/or the light-transparent roof material according to any one of claim 4 to claim 6.

9. An adhesive composition comprising 1 to 100 parts by mass of polymer fine particles with respect to 100 parts by mass of a temperature-sensitive adhesive agent,
a refractive index of the temperature-sensitive adhesive agent increasing with a decrease in temperature, and
a refractive index increasing rate as an amount of increase in the refractive index per 1°C of the temperature-sensitive adhesive agent being larger near a melting point of the temperature-sensitive adhesive agent than in a temperature range not near the melting point of the temperature-sensitive adhesive agent,
adhesive force of the adhesive composition decreasing with a decrease in temperature, and
an adhesive force reduction rate as an amount of decrease in the adhesive force per 1°C of the adhesive composition being larger near the melting point of the temperature-sensitive adhesive agent than in a temperature range not near the melting point of the temperature-sensitive adhesive agent.

10. The adhesive composition according to claim 9, wherein the adhesive force is 1 N/25 mm or more at 60°C, and 0.1 N/mm or less at 23°C.

11. The adhesive composition according to claim 9, wherein the temperature-sensitive adhesive agent comprises a side chain crystalline polymer, and
the side chain crystalline polymer comprises 30 to 90% by mass of a constituent unit derived from a (meth)acrylic monomer comprising a linear alkyl group having 14 or more carbon atoms.

12. An adhesive sheet comprising an adhesive layer comprising the adhesive composition according to any one of claim 9 to claim 11.

13. The adhesive sheet according to claim 12, wherein a difference between a haze value of the adhesive layer at 60°C and a haze value of the adhesive layer at 23°C is 10% or more.

14. A processing method of a workpiece, the method comprising:
bringing a workpiece into contact with the adhesive layer of the adhesive sheet according to claim 12;
confirming that the adhesive layer exhibits adhesive force by confirming that the adhesive layer is cloudy or is not cloudy;
processing the workpiece fixed to the adhesive layer by the adhesive force exhibited by the adhesive layer;
confirming that the adhesive layer does not exhibit adhesive force by confirming that the adhesive layer is not cloudy or is cloudy; and
removing the processed workpiece from the adhesive layer not exhibiting the adhesive force.

15. A processing method of a workpiece, the method comprising:
bringing a support and a workpiece into contact, or workpieces into contact with each other via the adhesive layer of the adhesive sheet according to claim 12;
confirming that the adhesive layer exhibits adhesive force by confirming that the adhesive layer is cloudy or is not cloudy;
processing the workpiece fixed to the support via the adhesive layer by the adhesive force exhibited by the adhesive layer, or at least one of a plurality of the workpieces fixed to each other via the adhesive layer by the adhesive force exhibited by the adhesive layer;
confirming that the adhesive layer does not exhibit adhesive force by confirming that the adhesive layer is not cloudy or is cloudy; and
removing the processed workpiece from the adhesive layer not exhibiting the adhesive force.
